Europäisches Patentamt

European Patent Office

Office européen des brevets

(11) Publication number: **0 081 932**
A1

# EUROPEAN PATENT APPLICATION

(12)

(21) Application number: **82306244.3**

(22) Date of filing: **24.11.82**

(51) Int. Cl.³: **C 09 K 5/06**

(30) Priority: **27.11.81 DE 3147178**

(43) Date of publication of application: **22.06.83**
**Bulletin 83/25**

(84) Designated Contracting States: **AT BE CH FR GB IT LI NL**

(71) Applicant: **The British Petroleum Company p.l.c., Britannic House Moor Lane, London EC2Y 9BU (GB)**

(72) Inventor: **Ehlers, Joern, Deutsche BP Aktiengesellschaft Postfach 600 340, D-2000 Hamburg 60 (DE)**
Inventor: **Hauelt, Helmut, Deutsche BP Aktiengesellschaft Postfach 600 340, D-2000 Hamburg 60 (DE)**

(74) Representative: **Ryan, Edward Terrence et al, BP INTERNATIONAL LIMITED Patents and Licensing Division Chertsey Road, Sunbury-on-Thames Middlesex, TW16 7LN (GB)**

(54) **Latent heat storage medium.**

(57) A latent heat storage agent consisting of 69.5 to 70.5 per cent by weight sodium hydroxide and 30.5 to 29.5 per cent by weight water is suitable for suppressing troublesome supercooling phenomena in the melt, especially in heat storage systems with inert intermediate heat transfer agents.

EP 0 081 932 A1

0081932

1

## LATENT HEAT STORAGE MEDIUM

The invention relates to a latent heat storage medium based on an aqueous sodium hydroxide solution.

Latent heat storage media in which the fusion enthalpy of a substance is utilised, are known, for example, from Energy Research, Fol. 1, pages 351-363 (1977) and also Ashrae Journal, September 1974, pages 38-44. The use of sodium hydroxide monohydrate as heat storage agent is known from CH-PS 363 130. Furthermore, a latent heat storage agent of the type named above is known from DE-OS 2 845 865, which has a sodium hydroxide content of 64-74%, especially 67-71%.

Latent heat storage agents of the abovementioned type must comply, in particular, with the following requirements:

1. The energy density must be considerably above that of water storage vessels;

2. The storage vessel temperature should be constant as far as possible, that is to say the temperature difference between the charging and discharging cycle must be as small as possible.

3. The physical properties of the storage medium should not make any special demands on the designs of the vessel;

4. The charging and discharging cycle must be capable of being repeated any number of times.

A selection of heat storage media merely on the basis of thermodynamic data does not lead automatically to success, because with these systems as a rule marked supercooling phenomena of the melt occur before crystallisation sets in. Such phenomena, however, are not desired in the heat storage media of the type referred to here, because they lower the efficiency of the energy storage.

1

Means for the prevention or at least for the reduction in supercooling are already known. The most effective method is the addition of substances which have similar lattice properties to those of the heat storage medium but are insoluble in it, and furthermore have a higher melting point than the heat storage medium. However, it is not every substance which corresponds to the above-mentioned features for a given storage medium which is also suitable for preventing supercooling effectively. Therefore it is not possible either, to select suitable combinations of media and nucleators by calculation on the basis of thermodynamic and crystallographic tabular value.

The invention is aimed at a heat storage agent of the type mentioned at the outset, which makes it possible to suppress effectively or reduce the supercooling phenomena of the melt.

This problem is solved by a latent heat storage medium which consists of 69.5 to 70.5 per cent by weight sodium hydroxide and 29.5 to 30.5 per cent by weight water.

Surprisingly, the latent heat storage medium of the invention only has a marked supercooling phenomenon during the first cycles; this later recedes to a maximum of 3°C. This effect occurs only at a sodium hydroxide content of 69.5 per cent by weight and over. Below this concentration, for example at the stoichiometric ratio of 68.9 per cent by weight sodium hydroxide given for sodium hydroxide monohydrate, delays in crystallisation to a varying extent are observed when heat is withdrawn from the storage unit, even if the latent heat storage medium is in direct contact with a liquid heat transfer medium. These phenomena which have a negative effect on the efficacy of the storage unit are reliably prevented if the sodium hydroxide concentration is at least 69.5 per cent by weight. The top limit of 70.5 per cent by weight sodium hydroxide for the range claimed is set by the fact that above this limit the advantages produced by preventing supercooling as regards the heat balance are largely cancelled out again by the fact that when charging the storage unit for melting the solid phase present, in deviating upwards away from the stoichiometric concentration one must operate at an ever higher temperature.

The latent heat storage medium of the invention can be used to particular advantage in heat storage systems which operate with intermediate heat transfer media. In this connection the heat transfer media are generally a liquid inert substance insoluble in the storage medium, and which has a lower specific gravity than the storage medium. Hydrocarbons are the preferred transfer media. It has been found that supercooling of the heat storage medium of the invention can be avoided practically completely if the inert transfer medium, for example a hydrocarbon, is allowed to bubble through the melt in the form of small drops. The bubbling through of hydrocarbons as intermediate heat carriers is known in itself from Heating, Piping and Air Conditioning, December 1957, pages 147-151. In the case of the heat storage medium of the invention, however, it has been shown that crystals accumulate preferentially at the hydrocarbon/melt phase limit. These are continually conveyed upwards with the rising hydrocarbon/melt phase limit. These are continually conveyed upwards with the rising hydrocarbon bubbles and thus act as crystallisation nuclei, which do not settle on the bottom of a storage vessel as in other systems, eg systems containing Glauber's salt.

Further advantages and features of the latent heat storage medium of the invention will be seen from the following description, reference being made to the Drawing.

Figure 1 shows a heat storage unit in diagram form;

Figure 2 shows another heat storage unit with a heating system belonging to it.

The heat storage unit according to Fig 1 consists of a heat exchanger 1, which is connected at its bottom end via a pipe 2 with a source of heat or the reflux of a central heating system and at its top end via a pipe 3 with the heating system.

The heat exchanger 1 contains a number of spherical vessels 4, which vessels contain the heat storage medium of the invention. The vessels 4 are packed, for example, in a cubic close-packed sphere packing. The space filing, regardless of the radius of the sphere, is then 74%.

A heat carrier liquid is pumped through the heat exchanger 1.

The material used for the vessels 4 may in the first place be materials which are not permeable to the transfer medium. Thus the inclusion of the heat storage system of the invention in the vessels offers the advantage that the heat exchange surfaces are determined by the shape of the vessels, eg in the case of cubes by the radius. Furthermore, the effect of corrosion of the sodium hydroxide/water system can be restricted to the tank material. In this type of non-permeable vessel water can be used as the heat carrier fluid, as a result of which direct connection to a central heating system is possible.

On the other hand, the vessels 4 may also consist of a material which is permeable to the transfer medium; the heat carrier fluids used in this case must be media which are immiscible with sodium hydroxide/water system, eg hydrocarbons.

Fig 2 shows what is known as a dynamic heat storage system. It consists essentially of a heat exchange vessel 5, which is filled with the heat storage medium 6 and a hydrocarbon7.

The hydrocarbon 7 is first passed via a pipe 8 to a central heating system 9, where it gives off a part of its heat energy content. The hydrocarbon is then passed via a pipe 10 to a source of heat 11, where heat is fed to it as required. At this point, a heat pump, for example, can be installed. Next the hydrocarbon is returned via a pump 12, a pipe 13, a pipe 14 projecting into the vessel 5 as far as the vicinity of the vessel bottom, and a sparging means 15 into the vessel 5, when it is divided by the sparging means into fine droplets which ascend into the heat storage medium and are thus heated or give off heat. A more detailed explanation of a dynamic heat storage system of the type referred to here can be found in the passage from the Literature already mentioned, Heating, Piping and Air Conditioning, December 1957. It has been shown that with an arrangement according to Figure 2, in the heat storage medium of the invention, practically no supercooling phenomena at all occur.

The invention will be illustrated by the following examples.

### Comparative Test A

This is a test carried out using a mixture of sodium hydroxide and water consisting of 69% by weight of sodium hydroxide and 31% water. This corresponds almost exactly to the theoretical composition of sodium hydroxide monohydrate which is 68.95% by weight sodium hydroxide. It is the middle point of the range 67 to 71% by weight of sodium hydroxide disclosed in German patent specification DE-OS 2845865, and is the obvious NaOH/H₂O composition to test as a heat storage medium.

A round bottom glass flask, containing 300 g of a heat storage medium consisting of 69% by weight of sodium hydroxide and 31% by weight of water, was heated and cooled in a water bath between temperatures of 50°C and 70°C. The rate of temperature change in the bath was approximately 0.25°C per minute.

The change in temperature in the heat storage medium was recorded continuously for 50 cycles of heating and cooling. The difference between the solidification temperature of sodium hydroxide monohydrate (65°C) and the lower temperature at which crystals formed was taken from the records of the temperature of the heat storage medium. The average value over all cycles was then calculated.

The average super cooling was 14°C.

<u>Comparative Test B</u>

Sodium hydroxide is more expensive than water. It is therefore desirable to keep the sodium hydroxide concentration as low as possible as this reduces cost, and also increases heat storage capacity. A test was therefore carried out using a heat storage medium with a lower sodium hydroxide content.

Comparative Test A was repeated using a heat storage medium consisting of 68% by weight of sodium hydroxide and 32% by weight of water.

The average supercooling was 14°C.

<u>Example 1</u>

Comparative Test A was repeated using a heat storage medium consisting of 70% by weight of sodium hydroxide and 30% water, ie with a higher sodium hydroxide content than sodium hydroxide monohydrate. The prior disclosures relating to NaOH/H₂O heat storage media gave no reason to believe that any advantage would result from using a higher content of the more expensive sodium hydroxide. However it was surprisingly found that the average supercooling was only 3°C.

Example 2

An experiment was carried out as in Comparative Test A but using a heat storage medium consisting of 69.5% by weight of sodium hydroxide and 30.5% by weight of water.

The average supercooling was 3°C.

Comparative Test C

This experiment shows the behaviour of a sodium hydroxide/water heat storage medium contact with a heat transfer medium. The experiment was carried out using apparatus similar to that described (in Figures 1 and 2). The heat transfer medium was a technical white oil with a viscosity of 36 $mm^2$/s (36 cSt) at 20°C and a density of 0.85 $g/cm^3$ at 15°C.

A heat storage vessel containing 2 litres of heat storage medium was used. The quantity of circulating heat transfer medium was 2 litres/hour. Air was excluded from contact with the heat storage medium by maintaining it under a nitrogen atmosphere.

For charging the heat storage vessel the inlet temperature was adjusted to 70°C and for discharging heat the inlet temperature was set at 50°C. The temperature of the heat storage medium was recorded during the charging and discharging cycles and the average supercooling determined as in Comparative Test A.

With a heat storage medium consisting of 69% by weight sodium hydroxide and 31% water the average supercooling observed was 3°C.

Example 3

Comparative Test C was repeated using a heat storage medium consisting of 70% by weight sodium hydroxide and 30% by weight water. No supercooling was observed.

The above examples show that there is a narrow range of sodium hydroxide/water compositions in which the benefit of surprisingly reduced supercooling is obtained without an excessive economic penalty resulting from the increased content of sodium hydroxide.

Claims:

1. Latent heat storage medium based on aqueous sodium hydroxide solution, characterised in that it consists of 69.5% to 70.5% by weight of sodium hydroxide and 29.5 to 30.5% by weight of water.

2. A process for storing and releasing heat based on the use of a latent heat storage medium containing sodium hydroxide and water, characterised in that the heat storage medium consists of 69.5% to 70.5% by weight of sodium hydroxide and 29.5% to 30.5% by weight of water.

3. A process for storing and releasing heat according to claim 2 wherein the heat is transferred to and from the latent heat storage medium by means of an inert liquid substance insoluble in the storage medium which is allowed to pass upwardly through the medium in small drops.

4. A process according to claim 3 wherein the inert liquid substance is a hydrocarbon.

# 0081932

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| P,X | DE-A-3 020 984 (DEUTSCHE BP) *Claims 1-4* | 1-4 | C 09 K 5/06 |
| X,D | DE-A-2 845 865 (DEUTSCHE SOLVAG) *Claims 1,4,6* | 1-4 | |
| A | GB-A- 471 505 (MECANO FRANCAISE) *Claims 1,5,6* | 1 | |

TECHNICAL FIELDS SEARCHED (Int. Cl. 3)

C 09 K
F 24 J

The present search report has been drawn up for all claims

| Place of search | Date of completion of the search | Examiner |
|---|---|---|
| THE HAGUE | 29-03-1983 | NICOLAS H.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82